# EUROPEAN PATENT SPECIFICATION

(11) **EP 4 219 606 B1**
(45) Date of publication and mention of the grant of the patent: **19.08.2026**
(21) Application number: 22879628.0
(22) Date of filing: 14.09.2022
(51) Int. Cl.: C08J 5/18, C08G 73/10

(54) **POLYIMIDE-BASED RESIN FILM, SUBSTRATE FOR DISPLAY DEVICE USING SAME, AND OPTICAL DEVICE**
POLYIMIDHARZFOLIE, SUBSTRAT FÜR EINE ANZEIGEVORRICHTUNG DAMIT UND OPTISCHE VORRICHTUNG
FILM DE RÉSINE À BASE DE POLYIMIDE, SUBSTRAT POUR DISPOSITIF D'AFFICHAGE L'UTILISANT, ET DISPOSITIF OPTIQUE

(30) Priority: 08.12.2021 KR 20210174999; 31.08.2022 KR 20220110024
(43) Date of publication of application: 02.08.2023
(73) Proprietor: LG CHEM, LTD., Yeongdeungpo-gu, Seoul 07336 (KR)
(72) Inventor: KANG, Mi Eun, Daejeon 34122 (KR); PARK, Chan Hyo, Daejeon 34122 (KR); PARK, Jinyoung, Daejeon 34122 (KR); PARK, Chae Won, Daejeon 34122 (KR); LEE, Min Wook, Daejeon 34122 (KR)
(74) Representative: Goddar, Heinz J.
(86) International application number: PCT/KR2022/013676
(87) International publication number: WO 2023/106571

(56) References cited:
- WO-A1-2020/189759
- JP-A- 2005 082 726
- KR-A- 20000 035 259
- KR-A- 20110 010 009
- KR-A- 20130 050 373
- KR-B1- 101 796 875
- US-A1- 2014 329 941
- US-A1- 2015 183 931
- US-A1- 2019 345 288
- US-A1- 2021 009 760
- US-A1- 2021 198 426

## Description

### [TECHNICAL FIELD]

The present disclosure relates to a polyimide-based resin film that can realize excellent warpage properties and low retardation, a substrate for display device, and an optical device using the same.

### [BACKGROUND ART]

The display device market is rapidly changing based on flat panel displays (FPDs) that are easy to fabricate over a large area and can be reduced in thickness and weight. Such flat panel displays include liquid crystal displays (LCDs), organic light emitting displays (OLEDs), and electrophoresis displays (EPDs).

In line with recent efforts to further extend the application and use of flat panel displays, particular attention has focused on so-called flexible display devices in which flexible substrates are applied to flat panel displays. The application of such flexible display devices is particularly reviewed based on mobile devices such as smart phones, and the application fields thereof are gradually extended.

Generally, in the process of fabricating a flexible display device and a lighting device, a multi-layered inorganic film such as a buffer layer, an active layer, and a gate insulator is formed on a cured polyimide to manufacture a TFT device.

However, conventionally used polyimide resins have a large refractive index in the plane direction which have a big difference from the refractive index in the thickness direction. For this reason, the polyimide has anisotropic properties and thus, there is a limit that light distortion phenomena occur, which greatly reduces visibility.

In addition, the polyimide material contained in the polyimide layer (substrate layer) has a limitation in that the optical properties decrease due to deterioration of the polyimide during curing at a high temperature of 400°C or more, or it is difficult to secure flatness due to the physically twisted warpage properties.

Therefore, there is a need to develop a new polyimide that can satisfy excellent warpage properties while reducing the difference between the refractive index in the plane direction and that in the thickness direction to improve the visibility.

US 2021/009 760 A1 relates to a polyamic acid containing a structural unit represented by general formula (1) and a structural unit represented by general formula (2).

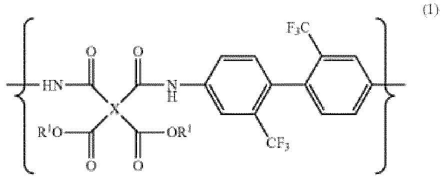

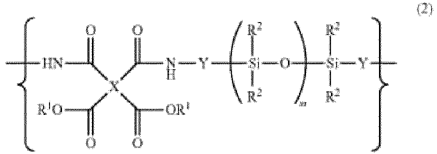

In general formula (1), the plurality of R¹s are each independently a hydrogen atom, a monovalent aliphatic group or an aromatic group. In general formula (2), the plurality of R²s are each independently an alkyl group having 1-3 carbon atoms or an aryl group having 6-10 carbon atoms. In general formulas (1) and (2), X is a tetravalent organic group. In general formula (2), the plurality of Ys are each independently an alkylene group having 1-3 carbon atoms or an arylene group having 6-10 carbon atoms, and m is an integer of 51-199.

### [DETAILED DESCRIPTION OF THE INVENTION]

### [Technical Problem]

It is an object of the present disclosure to provide a polyimide-based resin film that can achieve excellent optical properties, warpage properties, and low retardation.

It is another object of the present disclosure to provide a substrate for display device and an optical device using the polyimide-based resin film.

### [Technical Solution]

In order to achieve the above object, provided herein is a polyimide-based resin film comprising a polyimide-based resin containing a polyimide repeating unit represented by the following Chemical Formula 1 and a polyimide repeating unit represented by the following Chemical Formula 2: 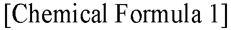 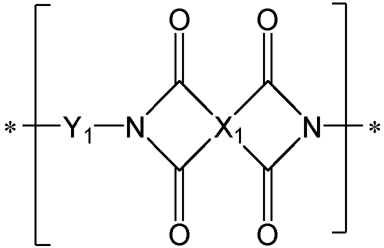 wherein, in Chemical Formula 1,
X₁ is an aromatic tetravalent functional group containing a monocyclic ring, and Y₁ is an aromatic divalent functional group having 6 to 10 carbon atoms, 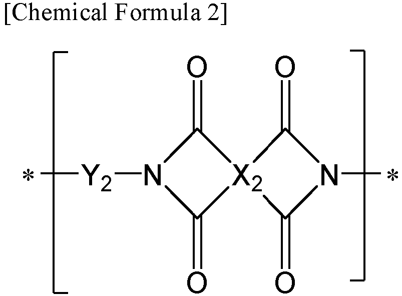
wherein, in Chemical Formula 2,
X₂ is an aromatic tetravalent functional group containing a polycyclic ring, and Y₂ is an aromatic divalent functional group having 6 to 10 carbon atoms,
wherein the aromatic divalent functional group having 6 to 10 carbon atoms comprises a functional group represented by the following Chemical Formula 3: 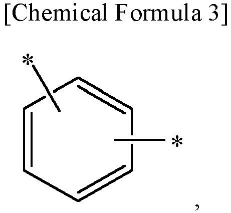
wherein the functional group represented by Chemical Formula 3 comprises a functional group represented by the following Chemical Formula 3-1: 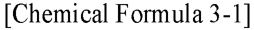 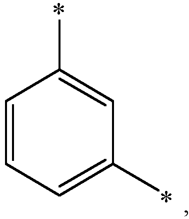 and
wherein a molar ratio between the polyimide repeating unit represented by Chemical Formula 1 and the polyimide repeating unit represented by Chemical Formula 2 is 85:15 to 15:85.

Also provided herein is a substrate for display device comprising the polyimide-based resin film.

Further provided herein is an optical device comprising the polyimide-based resin film.

Hereinafter, a polyimide-based resin film, and a substrate for display device and an optical device using the same will be described in more detail.

Unless otherwise specified throughout this specification, the technical terms used herein are only for describing specific embodiments and is not intended to limit the present disclosure.

The singular forms "a", and "an" used herein are intended to include the plural forms as well, unless the context clearly indicates otherwise.

The term "including" or "comprising" used herein specifies a specific feature, region, integer, step, action, element and/or component, but does not exclude the presence or addition of a different specific feature, area, integer, step, action, element, component and/or group.

The terms including ordinal numbers such as "a first", "a second", etc. are used only for the purpose of distinguishing one component from another component, and are not limited by ordinal numbers. For instance, a first component may be referred to as a second component, or similarly, the second component may be referred to as the first component, without departing from the scope of the present disclosure.

In the present disclosure, the (co)polymer includes not only a polymer but also a copolymer, the polymer means a homopolymer consisting of a single repeating unit, and the copolymer means a composite polymer containing two or more repeating units.

In the present disclosure, examples of the substituent groups are described below, but is not limited thereto.

As used herein, the term "substituted" means that other functional groups instead of a hydrogen atom in the compound are bonded, and a position to be substituted is not limited as long as it is a position at which the hydrogen atom is substituted, that is, a position at which it is substitutable with the substituent. When two or more substituents are substituted, the two or more substituents may be the same as or different from each other.

As used herein, the term "substituted or unsubstituted" means being unsubstituted or substituted with one or more substituents selected from the group consisting of deuterium; a halogen group; a cyano group; a nitro group; a hydroxyl group; a carbonyl group; an ester group; an imide group; an amide group; a primary amino group; a carboxy group; a sulfonic acid group; a sulfonamide group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkoxysilylalkyl group; an arylphosphine group; or a heterocyclic group containing at least one of N, O and S atoms, or being unsubstituted or substituted with a substituent to which two or more substituents are linked among the substituents exemplified above. For example, "the substituent to which two or more substituents are linked" may be a biphenyl group. That is, the biphenyl group may also be an aryl group, and may be interpreted as a substituent to which two phenyl groups are linked.

As used herein, the notation 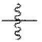 or 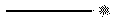 means a bond linked to another substituent group, and the direct bond means that a separate atom does not exist in a part represented by L.

In the present disclosure, aromatic is a characteristic that satisfies Huckel's rule, and a compound can be said to be aromatic if it satisfy all of the following three conditions according to Huckel's rule.
1) There must exist 4n+2 electrons which are fully conjugated by vacant p-orbital, unsaturated bond, unpaired electron pair, and so on.
2) 4n+2 electrons must constitute a planar isomer and form a ring structure.
3) All atoms in the ring must be able to participate in the conjugation.

In the present disclosure, a multivalent functional group is a residue in which a plurality of hydrogen atoms bonded to an arbitrary compound are removed, and as an example, it may be a divalent functional group, a trivalent functional group, and a tetravalent functional group. As an example, a tetravalent functional group derived from a cyclobutane means a residue in which any four hydrogen atoms bonded to cyclobutane are removed.

In the present disclosure, an aryl group is a monovalent functional group derived from arene, and is not particularly limited, but the carbon number thereof is preferably 6 to 20, and it may be a monocyclic aryl group or a polycyclic aryl group. The aryl group may be a phenyl group, a biphenyl group, a terphenyl group or the like as the monocyclic aryl group, but is not limited thereto. The polycyclic aryl group includes a naphthyl group, an anthracenyl group, a phenanthrenyl group, a pyrenyl group, a perylenyl group, a chrysenyl group, a fluorenyl group, and the like, but is not limited thereto.

In the present disclosure, a direct bond or a single bond means being linked to a bond line where no atoms or atomic groups exist at the corresponding position. Specifically, it means the case where no other atoms exist in the parts represented as L₁ and L₂ in Chemical Formula.

In the present disclosure, the weight average molecular weight means a weight average molecular weight in terms of polystyrene measured by GPC method. In the process of determining the weight average molecular weight in terms of polystyrene measured by the GPC method, a commonly known analyzing device, a detector such as a refractive index detector, and an analytical column can be used. Commonly applied conditions for temperature, solvent, and flow rate can be used. Specific examples of the measurement condition are as follows: Waters PL-GPC220 instrument and Polymer Laboratories PLgel MIX-B 300 mm length column are used, the evaluation temperature is 160°C, 1,2,4-trichlorobenzene is used as a solvent, the flow rate is 1 mL/min, samples are prepared at a concentration of 10 mg/10 mL and then supplied in an amount of 200 µL, and the values of Mw can be obtained using a calibration curve formed using a polystyrene standard. Nine kinds of the polystyrene standards are used with the molecular weight of 2,000 / 10,000 / 30,000 / 70,000 / 200,000 / 700,000 / 2,000,000 / 4,000,000 / 10,000,000.

Now, the present disclosure will be described in more detail.

### 1. Polyimide-based resin film

According to the present disclosure, there is provided a polyimide-based resin film comprising a polyimide-based resin containing a polyimide repeating unit represented by the following Chemical Formula 1 and a polyimide repeating unit represented by the following Chemical Formula 2: 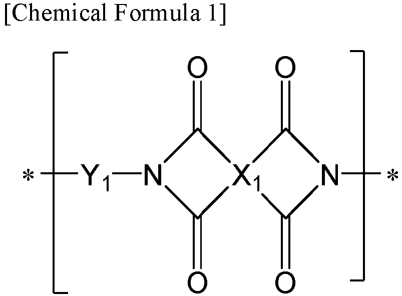 wherein, in Chemical Formula 1,
X₁ is an aromatic tetravalent functional group containing a monocyclic ring, and Y₁ is an aromatic divalent functional group having 6 to 10 carbon atoms, 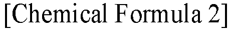 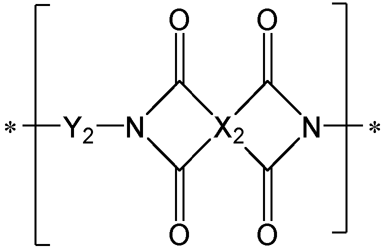
wherein, in Chemical Formula 2,
X₂ is an aromatic tetravalent functional group containing a polycyclic ring, and Y₂ is an aromatic divalent functional group having 6 to 10 carbon atoms,
wherein the aromatic divalent functional group having 6 to 10 carbon atoms comprises a functional group represented by the following Chemical Formula 3: 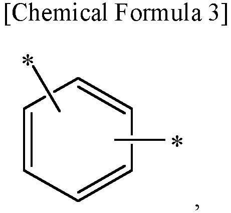
wherein the functional group represented by Chemical Formula 3 comprises a functional group represented by the following Chemical Formula 3-1: 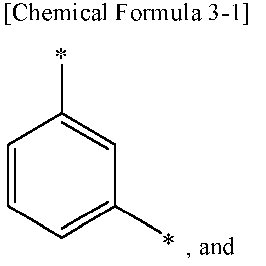 and
wherein a molar ratio between the polyimide repeating unit represented by Chemical Formula 1 and the polyimide repeating unit represented by Chemical Formula 2 is 85:15 to 15:85.

The present inventors have found through experiments that when the polyimide repeating unit represented by Chemical Formula 1 and the polyimide repeating unit represented by Chemical Formula 2 are included at the same time as in the polyimide-based resin film of the one embodiment, a polyimide resin film cured at a high temperature of 400°C or more can minimize occurrence of warpage, has high flatness and dimensional stability, and can solve defects caused by the detachment phenomenon during a panel process, and at the same time, as the refractive index in the thickness direction increases, the difference between the refractive index in the plane direction and that in the thickness direction decreases, and the optical isotropy increases to realize a low retardation, thereby capable of securing a diagonal viewing angle of the display to which the polyimide-based resin film is applied, and preventing deterioration of visibility due to light distortion phenomena. The present disclosure has been completed on the basis of such findings.

Particularly, since the polyimide-based resin includes a reaction product obtained through imidization reaction of an aromatic tetracarboxylic dianhydride containing a polycyclic ring, and an aromatic diamine having 6 to 10 carbon atoms, as in the structure represented by Chemical Formula 2, high heat resistance can be ensured by physical and chemical actions caused by the structure of aromatic tetracarboxylic dianhydride containing a polycyclic ring, so that excellent flatness appears to be achieved not only in the film cured through heat treatment at a high temperature of 400°C or more, but also during additional heat treatment of the cured film at a high temperature of 400°C or more. In addition, an asymmetric structure with increased steric hindrance due to the polycyclic ring is introduced into the polyimide chain structure, thereby capable of reducing the difference between the refractive index in the plane direction and that in the thickness direction and realizing a low retardation.

Further, the low retardation appears to be achieved by reducing the difference between the refractive index in the plane direction and that in the thickness direction due to the aromatic diamine having 6 to 10 carbon atoms having a curved asymmetric structure.

Further, the polyimide-based resin includes a reaction product obtained through imidization reaction of an aromatic tetracarboxylic dianhydride containing a monocyclic ring, and an aromatic diamine having 6 to 10 carbon atoms, as in the structure represented by Chemical Formula 1, whereby the low retardation appears to be achieved by reducing the difference between the refractive index in the plane direction and that in the thickness direction due to the aromatic diamine having 6 to 10 carbon atoms having a curved asymmetric structure.

More specifically, in the case of a polyimide having a planar linear main chain structure, since polyimides are packed side by side and stacked, the refractive index in the thickness direction is low, whereas an asymmetric structure is introduced in a bent form into the polyimide chain structure, which can thus maintain the arrangement in the thickness direction and reducing the difference between the refractive index in the plane direction and that in the thickness direction, thereby realizing a low retardation.

The polyimide-based resin film according to the present disclosure can increase the refractive index, and can be used as a substrate layer in a flexible display device to reduce the difference in refractive indices between layers constituting a device, thereby reducing the amount of light that is dissipated inside and effectively increasing the efficiency of bottom emission of light.

Specifically, the polyimide-based resin film may include a polyimide-based resin. The polyimide-based resin refers to including all of polyimide, and polyamic acid or polyamic acid ester which is a precursor polymer thereof. That is, the polyimide-based resin may include at least one selected from the group consisting of a polyamic acid repeating unit, a polyamic acid ester repeating unit, and a polyimide repeating unit. That is, the polyimide-based resin may include one kind of polyamic acid repeating unit, one kind of polyamic acid ester repeating unit, one kind of polyimide repeating unit, or a mixed copolymer of two or more repeating units thereof.

The at least one repeating unit selected from the group consisting of the polyamic acid repeating unit, the polyamic acid ester repeating unit, and the polyimide repeating unit may form a main chain of the polyimide-based resin.

The polyimide-based resin film may include a cured product of the polyimide-based resin. The cured product of the polyimide-based resin means a product obtained through a curing process of the polyimide-based resin.

Particularly, the polyimide-based resin includes a polyimide repeating unit represented by the following Chemical Formula 1. 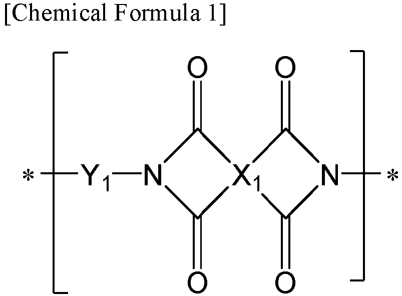 wherein, in Chemical Formula 1, X₁ is an aromatic tetravalent functional group containing a monocyclic ring, and Y₁ is an aromatic divalent functional group having 6 to 10 carbon atoms.

In Chemical Formula 1, X₁ is an aromatic tetravalent functional group containing a monocyclic ring, and the X₁ is a functional group derived from a tetracarboxylic dianhydride compound used in the synthesis of a polyimide-based resin.

The aromatic tetravalent functional group containing a monocyclic ring of the X₁ may include a functional group represented by the following Chemical Formula 5 derived from pyromellitic dianhydride (PMDA).

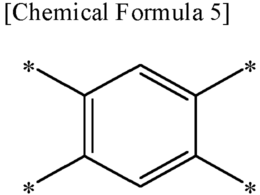

When the functional group represented by the Chemical Formula 5 is contained as the aromatic tetravalent functional group containing a monocyclic ring, the packing density of the polymer chains can increase by a flat structure, thereby realizing high heat resistance and high mechanical properties.

Meanwhile, in Chemical Formula 1, Y₁ is an aromatic divalent functional group having 6 to 10 carbon atoms, and the Y₁ may be a functional group derived from a polyamic acid, a polyamic acid ester, or a diamine compound used in the synthesis of polyimide.

The aromatic divalent functional group having 6 to 10 carbon atoms includes a phenylene group. More specifically, the aromatic divalent functional group having 6 to 10 carbon atoms of the Y₁ includes a functional group represented by the following Chemical Formula 3.

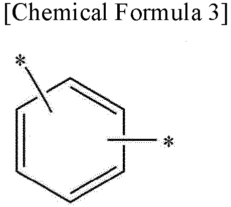

The functional group represented by Chemical Formula 3 includes a functional group represented by the following Chemical Formula 3-1 derived from m-phenylenediamine (1,3-phenylenediamine, m-PDA).

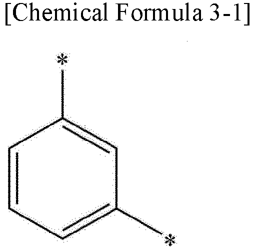

When the functional group represented by Chemical Formula 3-1 is contained in the Y₁, an asymmetric structure is introduced in a bent form into the polyimide chain structure, so that the arrangement can be maintained in the thickness direction, which can reduce the difference between the refractive index in the plane direction and that in the thickness direction, thereby realizing a low retardation.

Meanwhile, when a functional group derived from p-phenylenediamine (1,4-phenylenediamine, p-PDA), which does not have a curved asymmetric structure, is contained in the Y₁, it is difficult to achieve the above-mentioned curved asymmetric structure, so that the polyimide is polymerized in a plane linear direction, and the polymer grows only in the plane direction. Therefore, the packing between polymers is properly performed and the refractive index in the thickness direction decreases, which may cause a problem that the difference between the refractive index in the plane direction and that in the thickness direction increases.

Meanwhile, the polyimide-based resin further includes a polyimide repeating unit represented by the following Chemical Formula 2 in addition to the polyimide repeating unit represented by Chemical Formula 1. That is, the polyimide-based resin includes the polyimide repeating unit represented by Chemical Formula 1 and the polyimide repeating unit represented by the following Chemical Formula 2. 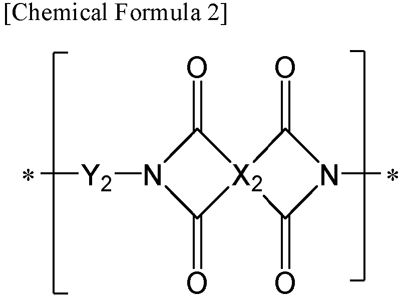 wherein, in Chemical Formula 2, X₂ is an aromatic tetravalent functional group containing a polycyclic ring, and Y₂ is an aromatic divalent functional group having 6 to 10 carbon atoms.

The Y₂ is the same as Y₁ in Chemical Formula 1.

In Chemical Formula 2, X₂ is an aromatic tetravalent functional group containing a polycyclic ring, and X₂ is a functional group derived from a tetracarboxylic dianhydride compound used in the synthesis of a polyimide-based resin.

More specifically, the tetravalent functional group of the X₂ may include a tetravalent functional group represented by the following Chemical Formula 4. 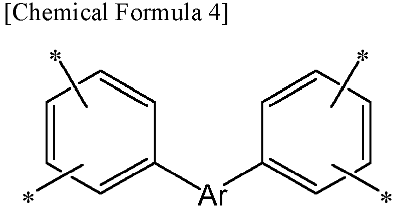 wherein, in Chemical Formula 4, Ar is a polycyclic aromatic divalent functional group. The polycyclic aromatic divalent functional group is a divalent functional group derived from a polycyclic aromatic hydrocarbon compound or a derivative compound thereof, wherein the derivative compound includes all compounds in which at least one substituent is introduced or a carbon atom is replaced with a heteroatom.

More specifically, in Ar of Chemical Formula 4, the polycyclic aromatic divalent functional group may include a fused cyclic divalent functional group containing at least two or more aromatic ring groups. That is, the polycyclic aromatic divalent functional group may contain at least two or more aromatic ring groups in the functional group structure, wherein the functional group may have a fused ring structure.

The aromatic ring group may include an arene group containing at least one benzene ring, or a hetero arene group in which a carbon atom in the arene group is replaced with a hetero atom.

At least two or more aromatic ring groups may be contained in the polycyclic aromatic divalent functional group, wherein each of the at least two or more aromatic ring groups may directly form a fused ring or may form a fused ring via another ring structure. As an example, when two benzene rings are each fused to a cycloalkyl ring structure, it can be defined that two benzene rings have formed a fused ring via a cycloalkyl ring.

The fused cyclic divalent functional group containing at least two or more aromatic ring groups is a divalent functional group derived from a fused cyclic compound containing at least two or more aromatic ring groups or a derivative thereof, wherein the derivative compound includes all compounds in which at least one substituent is introduced or a carbon atom is replaced with a heteroatom.

In Ar of Chemical Formula 4, the polycyclic aromatic divalent functional group may include a fluorenylene group. Specific examples of the functional group represented by Chemical Formula 4 may include a functional group represented by the following Chemical Formula 4-1 derived from 9,9-bis(3,4-dicarboxyphenyl)fluorene dianhydride ( BPAF).

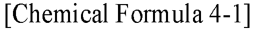

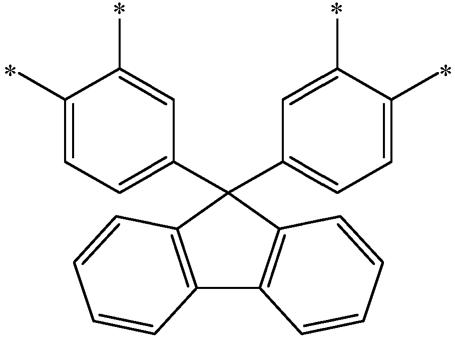

When the aromatic tetravalent functional group containing a polycyclic ring is contained in the X₂, not only a symmetrical structure, in which steric hindrance is increased due to a polycyclic ring, is introduced into the polyimide chain structure, which can thus alleviate deformation by heat and improve heat resistance, but also a bulky structure, in which steric hindrance is increased in the thickness direction due to the polycyclic ring, is introduced into the polyimide chain structure, which thus increases the refractive index in the thickness direction and reduces the difference between the refractive index in the plane direction and that in the thickness direction, thereby realizing a low retardation, and suppressing intermolecular packing to realize high transmittance.

The polyimide-based resin may include a combination of an aromatic tetracarboxylic dianhydride containing a monocyclic ring, an aromatic tetracarboxylic dianhydride containing a polycyclic ring, and an aromatic diamine having 6 to 10 carbon atoms.

The aromatic tetracarboxylic dianhydride containing a monocyclic ring is a compound in which an anhydride group (-OC-O-CO-) is introduced at both ends of the aromatic tetravalent functional group containing a monocyclic ring, and the details of the aromatic tetravalent functional group containing a monocyclic ring are the same as described above.

Specific examples of the aromatic tetracarboxylic dianhydride containing a monocyclic ring may include pyromellitic dianhydride (PMDA).

The aromatic tetracarboxylic dianhydride containing a polycyclic ring is a compound in which an anhydride group (-OC-O-CO-) is introduced at both ends of the aromatic tetravalent functional group containing a polycyclic ring, and the details of the aromatic tetravalent functional group containing a polycyclic ring are the same as described above.

Specific examples of the aromatic tetracarboxylic dianhydride containing a polycyclic ring may include 9,9-bis(3,4-dicarboxyphenyl)fluorene dianhydride (BPAF).

The aromatic diamine having 6 to 10 carbon atoms is a compound in which an amino group (-NH₂) is introduced at both ends of the aromatic divalent functional group having 6 to 10 carbon atoms, and the details of the aromatic divalent functional group having 6 to 10 carbon atoms are the same as described above. Specific examples of the aromatic diamine having 6 to 10 carbon atoms may include m-phenylenediamine (1,3-phenylenediamine, m-PDA).

More specifically, the polyimide-based resin may form a bond between a nitrogen atom of an amino group and a carbon atom of an anhydride group due to a reaction between the terminal anhydride group (-OC-O-CO-) of the aromatic tetracarboxylic dianhydride, the aromatic tetracarboxylic dianhydride containing a polycyclic ring, and the terminal amino group (-NH₂) of the aromatic diamine having 6 to 10 carbon atoms.

Meanwhile, the polyimide-based polymer may include a first repeating unit containing a repeating unit represented by Chemical Formula 1 wherein the anhydride-derived repeating unit is a functional group represented by Chemical Formula 5; and a second repeating unit containing a repeating unit represented by Chemical Formula 2, wherein the anhydride-derived repeating unit is a functional group represented by Chemical Formula 4. The first repeating unit and the second repeating unit may be randomly arranged in the polyimide-based polymer to form a random copolymer, or may form a block between the first repeating units and a block between the second repeating units to form a block copolymer.

The polyimide-based polymer including the repeating unit represented by Chemical Formula 1 and the repeating unit represented by Chemical Formula 2 can be prepared by reacting two kinds or more of mutually different tetracarboxylic dianhydride compounds with a diamine compound, and the two kinds of tetracarboxylic dianhydride compounds can be simultaneously added to synthesize a random copolymer, or sequentially added to synthesize a block copolymer.

The molar ratio between the polyimide repeating unit represented by Chemical Formula 1 and the polyimide repeating unit represented by Chemical Formula 2 is 85:15 to 15:85, preferably 80:20 to 20:80, or 75:25 to 25:75, or 60:40 to 40:60, or 60:40 to 70:30, or 70:30 to 85:15.

More specifically, the molar ratio of the polyimide repeating unit represented by Chemical Formula 2 relative to 1 mol of the polyimide repeating unit represented by Chemical Formula 1 may be 0.17 mol to 6 mol, or 0.25 mol to 4 mol, or 0.33 mol to 3 mol, or 0.6 mol to 1.5 mol, or 0.4 mol to 0.7 mol, or 0.17 mol to 0.5 mol.

Excellent warpage properties and excellent colorless/transparent optical properties can be realized, and at the same time, the refractive index in the thickness direction increases, whereby the optical isotropy can be increased through a low retardation (Rₜₕ) properties in the thickness direction, so that a diagonal viewing angle of the display to which the polyimide-based resin film is applied can be secured, thereby preventing deterioration of visibility due to light distortion phenomena.

On the other hand, when the polyimide repeating unit represented by Chemical Formula 1 is contained in an excessively small amount and thus, the molar ratio between the polyimide repeating unit represented by Chemical Formula 1 and the polyimide repeating unit represented by Chemical Formula 2 deviates from 15:85, the heat resistance decreases due to a reduction of the glass transition temperature, and the occurrence of warpage increases in the polyimide resin film cured at a high temperature of 400°C or more, which makes it difficult to stack an element on the film, and also makes it impossible to perform subsequent processes.

In addition, when the polyimide repeating unit represented by Chemical Formula 2 is contained in an excessively small amount and thus, the molar ratio between the polyimide repeating unit represented by Chemical Formula 1 and the polyimide repeating unit represented by Chemical Formula 2 deviates from 85:15, there is a problem that the retardation Rₜₕ value in the thickness direction increases, and the visibility deteriorates due to the light distortion phenomena accompanying the increase in retardation. In addition, as the yellow index increases, the transparency property may deteriorate, and the optical properties may be degraded, such as a decrease in the thickness direction refractive index or average refractive index.

Meanwhile, the polyimide-based resin film of the one embodiment may include a cured product in which the polyimide-based resin is cured at a temperature of 400°C or more. The cured product means a product obtained through a curing step of the resin composition containing the polyimide-based resin, wherein the curing step can be performed at a temperature of 400 °C or more, or 400 °C or more and 500 °C or less.

The polyimide repeating unit represented by Chemical Formula 1 and the polyimide repeating unit represented by Chemical Formula 2 may be contained in an amount of 70 mol% or more, or 80 mol% or more, or 90 mol% or more, or 70 mol% or more and 100 mol% or less, 80 mol% or more and 100 mol% or less, 70 mol% or more and 90 mol% or less, 70 mol% or more and 99 mol% or less, 80 mol% or more and 99 mol% or less, 90 mol% or more and 99 mol% or less with respect to the total repeating units contained in the polyimide-based resin.

That is, the polyimide-based resin may consist of only the polyimide repeating unit represented by Chemical Formula 1 and the polyimide repeating unit represented by Chemical Formula 2, or most thereof may consists of the polyimide repeating unit represented by Chemical Formula 1 and the polyimide repeating unit represented by Chemical Formula 2.

The weight average molecular weight (measured by GPC) of the polyimide-based resin is not particularly limited, but may be, for example, 1000 g/mol or more and 200000 g/mol or less, or 10000 g/mol or more and 200000 g/mol or less.

The polyimide-based resin according to the present disclosure can exhibit excellent colorless/transparent characteristics while maintaining characteristics such as heat resistance, mechanical strength and the like due to its rigid structure. Thus, it can be used in various fields such as a substrate for a device, a cover substrate for a display, an optical film, an integrated circuit (IC) package, an adhesive film, a multi-layer FPC (flexible printed circuit), a tape, a touch panel, a protective film for an optical disk and the like, and particularly, it can be suitable for a cover substrate for a display.

More specifically, examples of the method of synthesizing the polyimide-based resin film is not particularly limited, but for example, a method of producing a polymer film including a step of coating a polymer composition containing the polyimide-based resin onto a substrate to form a coating film (step 1); a step of drying the coating film (step 2); and a step of heat-treating and curing the dried coating film (step 3) can be used.

Step 1 is a step of coating the polymer composition containing the polyimide-based resin described above onto a substrate to form a coating film. The method of coating the polymer composition containing the polyimide-based resin onto the substrate is not particularly limited, but for example, methods such as screen printing, offset printing, flexographic printing, inkjet, and the like can be used.

Further, the polymer composition containing the polyimide-based resin may be in the form of being dissolved or dispersed in an organic solvent. In the case of having these forms, for example, when a polyimide-based resin is synthesized in an organic solvent, the solution may be the reaction solution itself to be obtained, or the reaction solution may be diluted with another solvent. Further, when the polyimide-based resin is obtained as a powder, it may be dissolved in an organic solvent to form a solution.

Specific examples of the organic solvent include N,N-dimethylformamide, N,N-dimethylacetamide, N-methyl-2-pyrrolidone, N-methylcaprolactam, 2-pyrrolidone, N-ethylpyrrolidone, N-vinylpyrrolidone, dimethylsulfoxide, tetramethylurea, pyridine, dimethyl sulfone, hexamethyl sulfoxide, γ-butyrolactone, 3-methoxy-N,N-dimethylpropanamide, 3-ethoxy-N,N-dimethylpropanamide, 3-butoxy-N,N-dimethylpropanamide, 1,3-dimethyl-imidazolidinone, ethyl amyl ketone, methyl nonyl ketone, methyl ethyl ketone, methyl isoamyl ketone, methyl isopropyl ketone, cyclohexanone, ethylene carbonate, propylene carbonate, diglyme, 4-hydroxy-4-methyl-2-pentanone, ethylene glycol monomethyl ether, ethylene glycol monomethyl ether acetate, ethylene glycol monoethyl ether, ethylene glycol monoethyl ether acetate, ethylene glycol monopropyl ether, ethylene glycol monopropyl ether acetate, ethylene glycol monoisopropyl ether, ethylene glycol monoisopropyl ether acetate, ethylene glycol monobutyl ether, ethylene glycol monobutyl ether acetate and the like. They can be used alone or in combination of two or more.

The polymer composition containing the polyimide-based resin may contain a solid content in such an amount that the polymer composition has an appropriate viscosity in consideration of processability such as coating property during a film forming process. For example, the content of the composition can be adjusted so that the total resin content is 5% by weight or more and 25% by weight or less, or alternatively, can be adjusted to 5% by weight or more and 20% by weight or less, or 5% by weight or more and 15% by weight or less.

In addition, the polymer composition containing the polyimide-based resin may further include other components in addition to the organic solvent. In a non-limiting example, when the polymer composition containing the polyimide-based resin is coated, compounds capable of improving the uniformity of the thickness of a film and the surface smoothness, or improving the adhesion between a polymer composition and a substrate, or changing the dielectric constant and conductivity or increasing the denseness, may be further included. Examples of these compounds may include surfactants, silane-based compounds, dielectrics or crosslinking compounds, and the like.

Step 2 is a step of drying the coating film formed by coating the polymer composition containing the polyimide-based resin onto a substrate.

The step of drying the coating film may be performed by a heating means such as a hot plate, a hot air circulating oven, an infrared oven, and the like, and the drying may be performed at a temperature of 50°C or more and 150°C or less, or 50°C or more and 100°C or less.

Step 3 is a step of heat-treating and curing the dried coating film. At this time, the heat treatment can be performed by a heating means such as a hot plate, a hot air circulating oven, an infrared oven, and the like, and the heat treatment can be performed at a temperature of 200°C or more, or 200°C or more and 300°C or less, or 400°C or more, or 400°C or more and 500°C or less.

The thickness of the polyimide-based resin film is not particularly limited, but can be freely adjusted, for example, within the range of 0.01 *µ*m or more and 1000 *µ*m or less. When the thickness of the polyimide-based resin film increases or decreases by a specific value, the physical properties measured by the polyimide-based resin film can also change by a specific numerical value.

Meanwhile, the polyimide-based resin film of the one embodiment may have a residual stress in an inorganic substrate at a thickness of 10 *µ*m of 46 MPa or less, or 45 MPa or less, or 40 MPa or less, or 35 MPa or less, or 30 MPa or less, or 1 MPa or more, or 1 MPa to 46 MPa, or 10 MPa to 46 MPa, or 20 MPa to 46 MPa, or 1 MPa to 46 MPa, or 1 MPa to 40 MPa, or 1 MPa to 35 MPa, or 1 MPa to 30 MPa, or 10 MPa to 45 MPa, or 20 MPa to 45 MPa, or 28.7 MPa to 45 MPa. As the residual stress in an inorganic substrate is lowered in this way, the polyimide-based resin film of the one embodiment can reduce a residual stress, thereby solving the defect caused by detachment phenomena during a panel process.

Examples of the method and equipment for measuring the residual stress are not particularly limited, and various methods commonly used for measuring the residual stress can be applied without limitation. As an example, the residual stress can be measured using a residual stress measuring device on the polyimide-based resin film. Further, an example of the inorganic substrate may include a wafer substrate.

The residual stress can be measured from the polyimide-based resin film sample having a thickness of 10±1 *µ*m. When the thickness of the polyimide-based resin film increases or decreases by a specific value, the physical properties measured for the polyimide-based resin film may also change by a certain value.

When the residual stress of the polyimide-based resin film in the inorganic substrate at a thickness of 10 *µ*m excessively increases to more than 48 MPa or the like, a polyimide resin film cured at a high temperature of 400°C or more may occur warpage, which may cause defects due to detachment phenomena during the panel process.

Meanwhile, the polyimide-based resin film of the one embodiment has a retardation value in the thickness direction at a thickness of 10 *µ*m, of 300 nm or less, or 200 nm or less, or 100 nm or less, or 70 nm or less, or 30 nm or less, or 20 nm or less, or 1 nm or more, or 1 nm to 300 nm, or 1 nm to 200 nm, or 1 nm to 100 nm, or 1 nm to 70 nm, or 1 nm to 30 nm, or 1 nm to 20 nm. In this manner, the optical isotropic properties are increased through low thickness direction retardation (Rₜₕ) properties, and a diagonal viewing angle of the display to which the polyimide-based resin film is applied can be secured, thereby realizing excellent visibility.

Such a low retardation appears to be achieved by reducing the difference between the refractive indices in the plane direction and that in the thickness direction using m-phenylenediamine (m-PDA) which is a diamine having an asymmetric structure, as a monomer used for producing a polyimide-based resin film, as described later.

More specifically, in the case of a polyimide having a planar linear main chain structure, the polyimides are packed side by side and stacked and thus, the refractive index in the thickness direction is low, while a polyimide having a bent main chain structure does not pack well between molecules, and thus, the refractive index in the thickness direction may increase.

The retardation in the thickness direction can be measured at a wavelength of 532 nm, and examples of the measuring method and equipment are not particularly limited, and various methods commonly used for the measurement of the retardation in the thickness direction can be applied without limitation.

The retardation in the thickness direction can be measured from the polyimide-based resin film sample having a thickness of 10±1 *µ*m. When the thickness of the polyimide-based resin film increases or decreases by a specific value, the physical properties measured from the polyimide-based resin film can also change by a certain value.

Specifically, the retardation Rₜₕ in the thickness direction can be calculated according to the following Equation 1. ${R}_{th} \left(nm\right) = \left|\left[\left({n}_{x}+{n}_{y}\right)/2\right]-{n}_{z}\right| \times d$ in Equation 1, nₓ is the largest refractive index among in-plane refractive indices of the polyimide resin film measured by light having a wavelength of 532 nm; n_{y} is a refractive index perpendicular to nₓ among in-plane refractive indices of the polyimide resin film measured by light having a wavelength of 532 nm; n_{z} is the refractive index in the thickness direction of the polyimide resin film measured by light having a wavelength of 532 nm; and d is the thickness of the polyimide-based resin film.

That is, the retardation Rₜₕ in the thickness direction is a value obtained by multiplying the film thickness by the absolute value of the difference between the thickness direction refractive index value (n_{z}) and the average value [(nₓ+n_{y})/2] of the plane refractive index values. As the difference between the thickness direction refractive index value (n_{z}) and the average value [(nₓ+n_{y})/2] of the plane refractive index values is smaller, the lower value can be shown.

As the polyimide-based resin film satisfies the retardation value in the thickness direction at a thickness of 10 *µ*m of 100 nm or less, the difference between the thickness direction refractive index value (n_{z}) and the average value of the plane refractive index value [(nₓ+n_{y})/2] is reduced on the display to which the polyimide-based resin film is applied, thereby realizing excellent visibility.

When the retardation value in the thickness direction at a thickness of 10 *µ*m of the polyimide-based resin film excessively increases to more than 100 nm, or like, in a structure in which polyimide exists on the upper part during implementation of a transparent display, a distortion phenomenon occurs at the time of transmitting light, and thus, there is a technical limit that the refraction of transmitted light cannot be corrected even as a compensation film that technically compensates up to 45 nm.

The polyimide-based resin film may have a refractive index in the thickness direction at a wavelength of 532 nm based on a thickness of 10 *µ*m, of 1.71 or more, or 1.7103 or more, or 1.7120 or more, or 1.7130 or more, or 1.72 or less, or 1.71 to 1.72, or 1.7103 to 1.72, or 1.7120 to 1.72, or 1.7130 to 1.72, or 1.71 to 1.715, or 1.7102 to 1.7136. In addition, the polyimide-based resin film may have an plane refractive index at a wavelength of 532 nm based on a thickness of 10 *µ*m of 1.71 to 1.73.

Examples of the method and equipment for measuring the refractive index in the plane direction and the refractive index in the thickness direction are not particularly limited, and various methods commonly used for measuring the refractive index can be applied without limitation. As an example, the refractive index in the plane direction and the refractive index in the thickness direction can be measured at a wavelength of 532 nm using a prism coupler.

The refractive index can be measured from the polyimide-based resin film sample having a thickness of 10±1 *µ*m. When the thickness of the polyimide-based resin film increases or decreases by a specific value, the physical properties measured from the polyimide-based resin film may also change by a specific value.

When the refractive index in the thickness direction at a wavelength of 532 nm based on a thickness of 10 *µ*m is excessively reduced to less than 1.71 or the like, the polyimide-based resin film has a technical limitation in that the retardation increases due to an increase in the difference between the refractive index in the plane direction and the refractive index in the thickness direction, whereby in the case of implementing a transparent display, distortion phenomena occur when light is transmitted, and the visibility is poor.

The polyimide-based resin film may have an average refractive index at a wavelength of 532 nm based on a thickness of 10 *µ*m, of 1.7135 or more, or 1.7140 or more, or 1.7150 or more, or 1.7180 or more, or 1.72 or less, or 1.7135 to 1.72, or 1.7136 to 1.7182, or 1.7140 to 1.72, or 1.7150 to 1.72, or 1.7180 to 1.72. As an example of the method for measuring the average refractive index, the refractive indices in the plane direction (TE) and in the thickness direction (TM) at a wavelength of 532 nm were measured using a prism coupler, and the average refractive index was calculated according to the following Equation 2. $Average refractive index = \left({n}_{x}+{n}_{y}+{n}_{z}\right) / 3$ in Equation 2, nₓ is the largest refractive index among in-plane refractive indices of the polyimide polymer film measured by light having a wavelength of 532 nm; n_{y} is the refractive index perpendicular to nₓ among in-plane refractive indices of the polyimide polymer film measured by light having a wavelength of 532 nm; and n_{z} is the refractive index of the thickness direction of the polyimide polymer film measured by light having a wavelength of 532 nm.

The average refractive index can be measured from the polyimide-based resin film sample having a thickness of 10±1 *µ*m. When the thickness of the polyimide-based resin film increases or decreases by a specific value, the physical properties measured for the polyimide-based resin film can also change by a certain value.

Meanwhile, the polyimide-based resin film may have a haze value at a thickness of 10 *µ*m, of less than 1.0%, or 0.1% or more and less than 1.0%. The haze can be measured from the polyimide-based resin film sample having a thickness of 10±1 *µ*m. When the thickness of the polyimide-based resin film increases or decreases by a specific value, the physical properties measured for the polyimide-based resin film can also change by a certain value.

The polyimide-based resin film may have a Bow value at a thickness of 10 *µ*m, of 48 *µ*m or less, or 45 *µ*m or less , or 40 *µ*m or less, or 35 *µ*m or less, or 30 *µ*m or less, or 1 *µ*m or more, or 1 *µ*m to 48 *µ*m, or 1 *µ*m to 45 *µ*m, or 1 *µ*m to 40 *µ*m, or 1 *µ*m to 35 *µ*m, or 1 *µ*m to 30 *µ*m, or 10 *µ*m to 48 *µ*m, or 20 *µ*m to 48 *µ*m, or 28.35 *µ*m to 45.62 *µ*m. The Bow is also referred to as bending or bow, and is a type of surface flatness property of a material. For the details thereof, for example, a specific measurement method, and the like, various methods well known in the production field of a semiconductor wafer substrate can be applied without limitation.

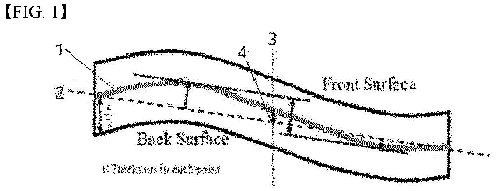

Specifically, the Bow 3 can be defined as the distance on the central axis 4 between the thickness central plane 1 and the reference plane 2 (Best fit plane of thickness central plane) as shown in Fig. 1 below.

The thickness central plane 1 refers to a plane connecting points that are half the thickness t (t/2) of the object to be measured, as shown in Fig. 1 below.

The reference plane 2 refers to a cross section by a straight line connecting the thickness central points of both ends of the object to be measured as shown in Fig. 1 below.

The central axis 4 refers to a straight line perpendicular to the horizontal plane passing through the center of gravity of the object to be measured, as shown in Fig. 1 below.

As an example of a method for measuring the Bow 3, a laser stress analyzer can be used. The stress analyzer measures the intensity of light reflected from the back surface of the measurement sample, and through a method of mathematically analyzing this, the Bow value can be automatically calculated and obtained.

The Bow may be measured for the polyimide-based resin film sample of the one embodiment having a thickness of 10±1 *µ*m.

The polyimide-based resin film sample used for Bow measurement includes a pure polyimide-based resin film; or a laminate containing a substrate film and a polyimide-based resin film coated on the substrate film. Examples of the substrate film are not particularly limited, and a glass substrate, a wafer substrate, or a mixture thereof can be used without limitation.

When the polyimide-based resin film sample used for the Bow measurement consists only of a pure polyimide-based resin film, the Bow can be automatically measured through the result of analyzing a polyimide-based resin film sample with a laser stress analyzer. For example, through the process of peeling the substrate film from the laminate containing the substrate film and the polyimide-based resin film coated on the substrate film, it is possible to secure a pure polyimide-based resin film.

When the Bow value of the polyimide-based resin film is excessively increased to more than 48 *µ*m or the like, the polyimide resin film cured at a high temperature of 400°C or more may occur warpage, which may cause defects due to the detachment phenomenon during a panel process.

Meanwhile, the polyimide-based resin film may have a yellow index at a thickness of 10 *µ*m of 25 or less, or 1 or more, or 1 to 25, or 6.27 to 22.8. When the yellow index at a thickness of 10 *µ*m of the polyimide-based resin film increases excessively to more than 25 or the like, there is a limit that the degree of yellow discoloration of the polyimide-based resin film increases, making it difficult to produce a colorless and transparent film.

Examples of the method and instrument for measuring the yellow index of the polyimide-based resin film of the one embodiment are not particularly limited, and various methods commonly used for the YI measurement can be applied without limitation. In one example, it can be measured using a color meter (Color-Eye 7000A available from GretagMacbeth).

The yellow index can be measured from the polyimide-based resin film sample having a thickness of 10±1 *µ*m. When the thickness of the polyimide-based resin film increases or decreases by a specific value, the physical properties measured for the polyimide-based resin film can also change by a certain value.

### 2. Substrate for Display Device

Meanwhile, according to another embodiment of the present disclosure, a substrate for a display device including the polyimide-based resin film of the other embodiment can be provided. The details of the polyimide-based resin film may include all of those described above in the one embodiment.

A display device including the substrate may include a liquid crystal display device (LCD), an organic light emitting diode (OLED), a flexible display, or a rollable display or foldable display, etc., but is not limited thereto.

The display device can have various structures depending on the field of application and specific shape, and the like, and for example, it may have a structure including a cover plastic window, a touch panel, a polarizing plate, a barrier film, a light emitting device (OLED device, etc.), a transparent substrate, and the like.

The polyimide-based resin film of the other embodiment described above can be used in various applications such as a substrate, an external protective film or a cover window in these various display devices, and more specifically, it may be applied as a sub strate.

For example, the substrate for display device may have a structure in which a device protection layer, a transparent electrode layer, a silicon oxide layer, a polyimide-based resin film, a silicon oxide layer, and a hard coating layer are sequentially stacked.

The transparent polyimide substrate may include a silicon oxide layer formed between the transparent polyimide-based resin film and the cured layer in terms of further improving the solvent resistance or water permeability and optical properties, and the silicon oxide layer may be produced by curing polysilazane.

Specifically, the silicon oxide layer is formed by coating and drying a solution containing polysilazane before forming a coating layer on at least one surface of the transparent polyimide-based resin film, and then curing the coated polysilazane.

The substrate for display device according to the present disclosure can provide a transparent polyimide cover substrate having excellent warpage properties and impact resistance, and solvent resistance, optical properties, moisture permeability and scratch resistance by containing the above-mentioned element protective layer.

### 3. Optical Device

Meanwhile, according to still another embodiment of the present disclosure, an optical device including the polyimide-based resin film of the other embodiment can be provided. The details of the polyimide-based resin film may include all those described above in the other embodiments.

The optical device may include various devices using properties realized by light, and can include, for example, a display device. Specific examples of the display device include a liquid crystal display device (LCD), an organic light emitting diode (OLED), a flexible display, or a rollable display or a foldable display, but is not limited thereto.

The optical device may have various structures depending on the field of application and the specific shape. For example, it may be a structure including a plastic cover window, a touch panel, a polarizer, a barrier film, a light emitting element (OLED element, etc.), a transparent substrate, or the like.

The polyimide-based resin film of another embodiment described above can be used in various applications such as a substrate, an external protective film, or a cover window in such various optical devices, and more specifically, it may be applied to a sub strate.

### [ADVANTAGEOUS EFFECTS]

According to the present disclosure, a polyimide-based resin film that can realize excellent warpage properties and low retardation, a substrate for display device, and an optical device using the same can be provided.

### [BRIEF DESCRIPTION OF THE DRAWING]

Fig. 1 is a cross-sectional view for measuring the Bow of the polyimide-based resin films obtained in Examples and Comparative Examples.

### [DETAILED DESCRIPTION OF THE EMBODIMENTS]

Hereinafter, the present invention will be described in more detail by way of examples. However, these examples are provided for illustrative purposes only and are not intended to limit the scope of the present disclosure.

### <Examples and Comparative Examples: Preparation of Polyimide Precursor Composition and Polyimide Film>

### Examples 1~4

### (1) Preparation of polyimide precursor composition

The organic solvent DMAc was filled in a reactor under nitrogen atmosphere, and while maintaining the temperature of the reactor at 25°C, m-phenylenediamine (1,3-phenylenediamine, m-PDA) was added thereto and dissolved at the same temperature. To a solution to which the m-phenylenediamine (1,3-phenylenediamine, m-PDA) was added, pyromellitic dianhydride (PMDA) and 9,9-bis (3,4-dicarboxyphenyl)fluorene dianhydride (BPAF) were added as acid dianhydride at the same temperature, and the mixture was stirred for 24 hours to prepare a polyimide precursor composition. At this time, the molar ratios of m-PDA, PMDA and BPAF are as shown in Table 1 below.

### (2) Preparation of polyimide film

The polyimide precursor composition was spin-coated on a glass substrate. The glass substrate coated with the polyimide precursor composition was placed in an oven and heated at a rate of 5°C/min, and maintained at 80°C for 30 minutes, at 250°C for 30 minutes and at 400°C for 30 minutes to proceed the curing step. After completion of the curing step, the glass substrate was immersed in water to peel off the film formed on the glass substrate, and dried in an oven at 100°C to prepare a polyimide film having a thickness of 10 *µ*m (including ±1 *µ*m error).

### Comparative Examples 1~5

A polyimide precursor composition and a polyimide film were prepared in the same manner as in the above Example, except that the molar ratios of m-PDA, p-PDA (1,4-phenylenediamine), TFMB (2,2'-bis (trifluoromethyl) benzidine), PMDA and BPAF were changed as described in Table 2 below.

### Reference Examples 1~3

A polyimide precursor composition and a polyimide film were prepared in the same manner as in the above Example, except that the molar ratios of m-PDA, PMDA and BPAF were changed as described in Table 3 below.

### <Experimental Example: Measurement of physical properties of polyimide precursor composition and polyimide film obtained in Examples and Comparative Examples>

The physical properties of the polyimide precursor compositions and the polyimide films obtained in Examples and Comparative Examples were measured by the following methods, and the results are shown in Tables 1 to 3 below.

### 1. Yellow index (YI)

The yellow indices of the polyimide films prepared in Examples and Comparative Examples were measured using a color meter (Color-Eye 7000A available from GretagMacbeth).

### 2. Haze

The haze value of the polyimide film was measured using a haze meter (NDH-5000).

### 3. Retardation (Rₜₕ) in the thickness direction

The refractive index values at a light of 532 nm of the polyimide films produced in Examples and Comparative Examples were inputted by using "AxoScan" manufactured by AXOMETRICS as a measuring device, and then the retardations in the thickness direction and the plane direction were measured using light with a wavelength of 532 nm under conditions of temperature: 25°C and humidity: 40%. The obtained retardation value in the thickness direction (the value measured by automatic measurement of the measuring device) was converted into a retardation value per 10 *µ*m thickness of the film, and the obtained values are shown in Table 1 below.

Specifically, the retardation Rₜₕ in the thickness direction was calculated according to the following Equation 1. ${R}_{th} \left(nm\right) = \left|\left[\left({n}_{x}+{n}_{y}\right)/2\right]-{n}_{z}\right| \times d$ (in Equation 1, nₓ is the largest refractive index among in-plane refractive indices of the polyimide resin film measured by light having a wavelength of 532 nm; n_{y} is a refractive index perpendicular to nₓ among in-plane refractive indices of the polyimide resin film measured by light having a wavelength of 532 nm; n_{z} is the refractive index in the thickness direction of the polyimide resin film measured by light having a wavelength of 532 nm; and d is the thickness of the polyimide-based resin film.)

### 4. Residual stress and Bow

The polyimide precursor compositions prepared in Examples and Comparative Examples were coated by a spin coater onto a 6in silicon wafer with a thickness of 525um, in which the amount of warpage of the wafer was measured in advance using a residual stress meter (FLX2320 available from TENCOR). Heat curing treatment was performed in a nitrogen atmosphere at 250°C for 30 minutes and 400°C for 30 minutes using an oven (available from Koyo Lindberg). After curing, a silicon wafer with a resin film was produced. The amount of warpage of the silicon wafer to which the resin film was attached was measured with a residual stress meter, and the absolute value of the difference from the amount of warpage of the wafer was previously expressed as a real Bow value, and the residual stress generated between the silicon wafer and the resin film was measured with a residual stress meter.

The Bow 3 is defined as the distance on the central axis between the thickness central plane and the reference plane (Best fit plane of thickness central plane) as shown in Fig. 1 below. The Bow of a sample was measured using a stress analyzer (TENCOR FLX-2320) at room temperature.

### 5. Refractive Index

For the polyimide films produced in Examples and Comparative Examples, the refractive indices in the plane direction (TE) and in the thickness direction (TM) were measured at a wavelength of 532 nm using a prism coupler, and the average refractive index was calculated according to the following Equation 2. $Average refractive index = \left({n}_{x}+{n}_{y}+{n}_{z}\right) / 3$ (in Equation 2, nₓ is the largest refractive index among in-plane refractive indices of the polyimide polymer film measured by light having a wavelength of 532 nm; n_{y} is the refractive index perpendicular to nₓ among in-plane refractive indices of the polyimide polymer film measured by light having a wavelength of 532 nm; and n_{z} is the refractive index of the thickness direction of the polyimide polymer film measured by light having a wavelength of 532 nm.)

**[Table 1]**

| Experimental Example Measurement Results of Examples | | | | | | | | |
|---|---|---|---|---|---|---|---|---|
| Category | Example 1 | | Example 2 | | Example 3 | | Example 4 | |
| Monomer molar ratio | 20/80/99.8 (PMDA/BPAF/ m-PDA) | | 50/50/99.8 (PMDA/BPAF/ m-PDA) | | 65/35/99.8 (PMDA/BPAF/ m-PDA) | | 80/20/99.8 (PMDA/BPAF/ m-PDA) | |
| Solid content (%) | | 20.5 | | 17.48 | | 17.95 | | 19.69 |
| YI | | 6.27 | | 12.61 | | 22.8 | | 20.03 |
| HAZE(%) | | 0.45 | | 0.84 | | 0.37 | | 0.36 |
| Rₜₕ (nm) | | 13 | | 28 | | 63 | | 100 |
| Residual stress(MPa) | | 45 | | 38.9 | | 33 | | 28.7 |
| Bow(*µ*m) | | 45.62 | | 38.44 | | 33.66 | | 28.35 |
| Plane direction | | 1.7141 | | 1.7158 | | 1.7166 | | 1.7222 |
| refractive index (nTE)@532nm | | | | | | | | |
| Thickness direction refractive index (nTM)@532nm | | 1.7125 | | 1.7136 | | 1.7104 | | 1.7102 |
| Average refractive index@532nm | | 1.7136 | | 1.7151 | | 1.7145 | | 1.7182 |

As shown in Table 1, it was confirmed that the polyimide films (based on a thickness of 10*µ*m) obtained in Examples 1 to 4 have a thickness direction retardation Rₜₕ value of 13 nm to 100 nm, a haze of 0.36% to 0.84%, a YI of 6.27 to 22.8, a residual stress of 28.7 MPa to 45 MPa, a Bow of 28.35 *µ*m to 45.62 *µ*m, an plane direction refractive index (nTE) at 532 nm of 1.7141 to 1.7222, a thickness direction refractive index (nTM) of 1.7102 to 1.7136, and an average refractive index at 532 nm of 1.7136 to 1.7182.

**[Table 2]**

| Experimental Example Measurement Results of Comparative Examples | | | | | |
|---|---|---|---|---|---|
| Category | Comparative Example 1 | Comparative Example 2 | Comparative Example 3 | Comparative Example 4 | Comparative Example 5 |
| Monomer molar ratio | 100/98.75 (BPAF/p-PDA) | 20/80/98.75 (PMDA/BP AF/p-PDA) | 0/100/98.75 (PMDA/BPA F/m-PDA) | 100/0/98.75 (PMDA/BPA F/m-PDA) | 80/20/100 (PMDA/BPAF/T FMB) |
| Solid content (wt. %) | 13.26 | 13.23 | 19.94 | 16.62 | 10.3 |
| YI | 4.16 | 13.00 | 8.05 | 27.42 | 9.03 |
| HAZE(%) | 0.26 | 0.40 | 0.30 | 0.30 | 0.17 |
| Rₜₕ (nm) | 35 | 74 | 7 | 319 | 508 |
| Residual stress(MPa) | 54.5 | 49.7 | 49.1 | 27.4 | 26 |
| Bow(*µ*m) | 51.37 | 47.48 | 49.75 | 38.44 | 25 |
| Plane direction refractive index (nTE)@532 nm | 1.7171 | 1.7084 | 1.7180 | 1.7210 | 1.6282 |
| Thickness direction refractive index (nTM)@53 2nm | 1.6993 | 1.6990 | 1.7030 | 1.6877 | 1.5773 |
| Average refractive index @532nm | 1.7112 | 1.7053 | 1.7130 | 1.7100 | 1.6114 |

As shown in Table 2, it was confirmed that the polyimide films (based on a thickness of *µ*m) obtained in Comparative Examples 1 to 5 have a thickness direction refractive index (nTM) at 532 nm of 1.5773 to 1.7030, an average refractive index at 532 nm of 1.6114 to 1.7130, which values are smaller relative to those of Examples. Particularly, there was problems that the polyimide films (based on a thickness of 10*µ*m) obtained in Comparative Examples 1 to 3 has a residual stress of 49.1 MPa to 54.5 MPa, which is higher than that of Examples, thus failing to realize flatness.

In addition, it was confirmed that the polyimide film obtained in Comparative Example 4 (based on a thickness of 10 *µ*m) has a thickness direction retardation Rₜₕ value of 319 nm, which is increased sharply relative to Example, and thus failed to realize a low retardation, and further YI increased to 27.42 and thus the transparency property is decreased.

Further, the polyimide film (based on a thickness of 10 *µ*m) obtained in Comparative Example 5 has a thickness direction retardation Rₜₕ value of 508 nm, which increases rapidly compared to Example, thus failing to realize a low retardation.

**[Table 3]**

| Experimental Example Measurement Results of Reference Examples | | | | | | |
|---|---|---|---|---|---|---|
| Category | Reference Example 1 | | Reference Example 2 | | Reference Example 3 | |
| Monomer | 98/2/98.75 | | 2/98/98.75 | | 10/90/99.8 | |
| molar ratio | (PMDA/BPAF/m-PDA) | | (PMDA/BPAF/m-PDA) | | (PMDA/BPAF/m-PDA) | |
| Solid content (wt%) | | 19.66 | | 20.1 | | 20 |
| YI | | 28.90 | | 8.0 | | 7.64 |
| HAZE(%) | | 0.14 | | 0.18 | | 0.38 |
| Rₜₕ (nm) | | 307 | | 10 | | 11 |
| Residual stress(MPa) | | 24.4 | | 48.5 | | 48 |
| Bow(*µ*m) | | 23.71 | | 48.9 | | 49.5 |
| Plane direction refractive index (nTE)@532nm | | 1.7198 | | 1.7173 | | 1.7138 |
| Thickness direction refractive index (nTM)@532nm | | 1.6903 | | 1.7039 | | 1.7121 |
| Average refractive index@532nm | | 1.7100 | | 1.7128 | | 1.7132 |

As shown in Table 3, it was confirmed that the polyimide film (based on a thickness of 10 *µ*m) obtained in Reference Example 1 has a thickness direction refractive index (nTM) at 532 nm of 1.6903, and an average refractive index at 532 nm of 1.7100, which values are smaller than those of Examples. Also, it was confirmed that the polyimide film obtained in Reference Example 1 (based on a thickness of 10 *µ*m) has a thickness direction retardation Rₜₕ value of 307 nm, which is increased rapidly as compared to Example, and thus failed to realize a low retardation, and further, the YI is increased to 28.90 and thus the transparency properties is deteriorated

On the other hand, there was a problem that the polyimide films obtained in Reference Examples 2 to 3 (based on a thickness of 10 *µ*m) have a residual stress of 48 MPa to 48.5 MPa and a Bow of 48.9 *µ*m to 49.5 *µ*m, which is increased as compared to Examples, thus failing to realize a high level of flatness.

## Claims

1. A polyimide-based resin film comprising a polyimide-based resin containing a polyimide repeating unit represented by the following Chemical Formula 1 and a polyimide repeating unit represented by the following Chemical Formula 2: 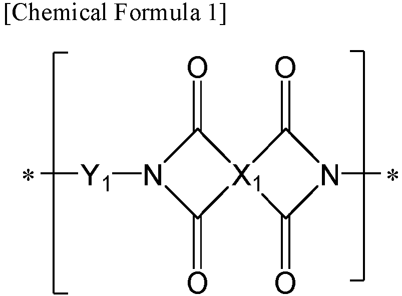 wherein, in Chemical Formula 1,
X₁ is an aromatic tetravalent functional group containing a monocyclic ring, and
Y₁ is an aromatic divalent functional group having 6 to 10 carbon atoms, 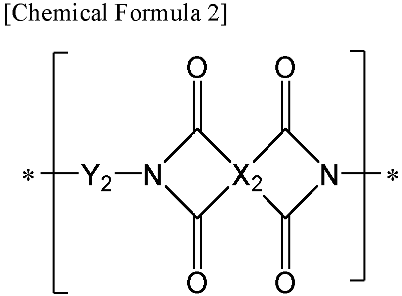
wherein, in Chemical Formula 2,
X₂ is an aromatic tetravalent functional group containing a polycyclic ring, and
Y₂ is an aromatic divalent functional group having 6 to 10 carbon atoms,
wherein the aromatic divalent functional group having 6 to 10 carbon atoms comprises a functional group represented by the following Chemical Formula 3: 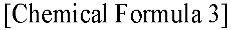 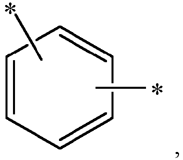
wherein the functional group represented by Chemical Formula 3 comprises a functional group represented by the following Chemical Formula 3-1: 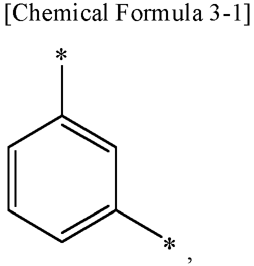 and
wherein a molar ratio between the polyimide repeating unit represented by Chemical Formula 1 and the polyimide repeating unit represented by Chemical Formula 2 is 85:15 to 15:85.

2. The polyimide-based resin film according to claim 1 wherein:
the polyimide-based resin film has a residual stress of 46 MPa or less in an inorganic substrate at a thickness of 10 *µ*m as described in the specification.

3. The polyimide-based resin film according to claim 1 wherein:
the polyimide-based resin film has a retardation Rₜₕ value of 300 nm or less in a thickness direction at a thickness of 10 *µ*m as described in the specifcation.

4. The polyimide-based resin film according to claim 1 wherein:
the polyimide-based resin film has a refractive index of 1.71 or more in a thickness direction at a wavelength of 532 nm based on a thickness of 10 *µ*m as measured at a wavelength of 532 nm using a prism coupler.

5. The polyimide-based resin film according to claim 1 wherein:
the polyimide-based resin film has a haze value of less than 1.0% at a thickness of 10 *µ*m as measured using a haze meter.

6. The polyimide-based resin film according to claim 1 wherein:
the polyimide-based resin film has a Bow value of 48 *µ*m or less at a thickness of 10 *µ*m as measured using a stress analyzer at room temperature.

7. The polyimide-based resin film according to claim 1 wherein:
the polyimide-based resin film has an average refractive index of 1.7135 or more at a wavelength of 532 nm based on a thickness of 10 *µ*m as measured at a wavelength of 532 nm using a prism coupler, and the average refractive index was calculated according to the following Equation 2: $Average refractive index = \left({n}_{x}+{n}_{y}+{n}_{z}\right) / 3$
in Equation 2, nₓ is the largest refractive index among in-plane refractive indices of the polyimide polymer film measured by light having a wavelength of 532 nm; n_{y} is the refractive index perpendicular to nₓ among in-plane refractive indices of the polyimide polymer film measured by light having a wavelength of 532 nm; and n_{z} is the refractive index of the thickness direction of the polyimide polymer film measured by light having a wavelength of 532 nm.

8. The polyimide-based resin film according to claim 1 wherein:
the aromatic tetravalent functional group containing a polycyclic ring of the X₂ comprises a tetravalent functional group represented by the following Chemical Formula 4: 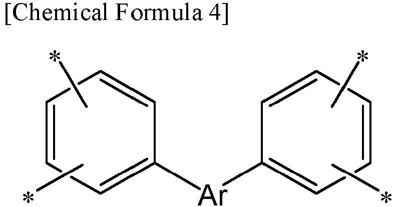
wherein, in Chemical Formula 4, Ar is a polycyclic aromatic divalent functional group.

9. The polyimide-based resin film according to claim 8 wherein:
the tetravalent functional group represented by Chemical Formula 4 comprises a functional group represented by the following Chemical Formula 4-1:

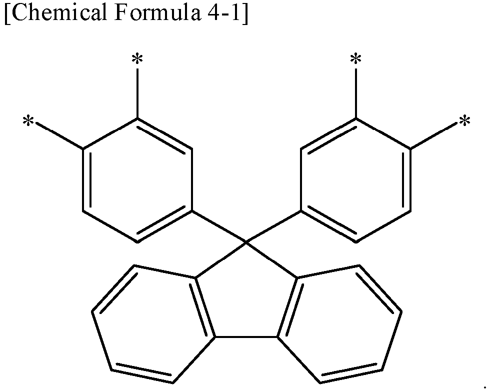

10. The polyimide-based resin film according to claim 1 wherein:
the aromatic tetravalent functional group containing a monocyclic ring of the X₁ comprises a functional group represented by the following Chemical Formula 5:

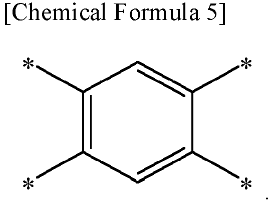

11. A substrate for display device comprising the polyimide-based resin film of claim 1.

12. An optical device comprising the polyimide-based resin film of claim 1.

## Patentansprüche

1. Harzfilm auf Basis von Polyimid, umfassend ein Harz auf Basis von Polyimid, enthaltend eine Polyimid-Wiederholungseinheit, dargestellt durch die folgende chemische Formel 1, und eine Polyimid-Wiederholungseinheit, dargestellt durch die folgende chemische Formel 2: 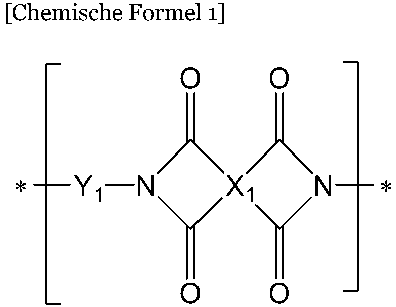 wobei in der chemischen Formel 1
X₁ eine aromatische vierwertige funktionelle Gruppe ist, die einen monocyclischen Ring enthält, und
Y₁ eine aromatische zweiwertige funktionelle Gruppe mit 6 bis 10 Kohlenstoffatomen ist, 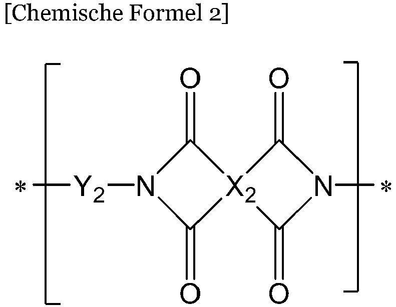
wobei in der chemischen Formel 2
X₂ eine aromatische vierwertige funktionelle Gruppe ist, die einen polycyclischen Ring enthält, und
Y₂ eine aromatische zweiwertige funktionelle Gruppe mit 6 bis 10 Kohlenstoffatomen ist,
wobei die aromatische zweiwertige funktionelle Gruppe mit 6 bis 10 Kohlenstoffatomen eine funktionelle Gruppe umfasst, dargestellt durch die folgende chemische Formel 3: 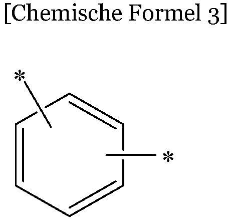
wobei die funktionelle Gruppe, dargestellt durch die chemische Formel 3, eine funktionelle Gruppe umfasst, dargestellt durch die folgende chemische Formel 3-1: 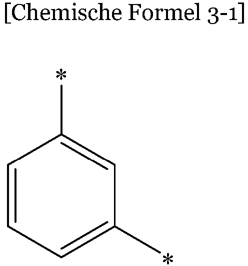 und
wobei ein Molverhältnis zwischen der Polyimid-Wiederholungseinheit, dargestellt durch die chemische Formel 1, und der Polyimid-Wiederholungseinheit, dargestellt durch die chemische Formel 2, 85:15 bis 15:85 beträgt.

2. Harzfilm auf Basis von Polyimid nach Anspruch 1, bei dem:
der Harzfilm auf Basis von Polyimid eine Eigenspannung von 46 MPa oder weniger in einem anorganischen Substrat bei einer Dicke von 10 *µ*m, wie in der Beschreibung beschrieben, aufweist.

3. Harzfilm auf Basis von Polyimid nach Anspruch 1, bei dem:
der Harzfilm auf Basis von Polyimid einen Verzögerungs-Rₜₕ-Wert von 300 nm oder weniger in einer Dickenrichtung bei einer Dicke von 10 *µ*m, wie in der Beschreibung beschrieben, aufweist.

4. Harzfilm auf Basis von Polyimid nach Anspruch 1, bei dem:
der Harzfilm auf Basis von Polyimid einen Brechungsindex von 1,71 oder mehr in einer Dickenrichtung bei einer Wellenlänge von 532 nm basierend auf einer Dicke von 10 *µ*m, gemessen bei einer Wellenlänge von 532 nm unter Verwendung eines Prismenkopplers, aufweist.

5. Harzfilm auf Basis von Polyimid nach Anspruch 1, bei dem:
der Harzfilm auf Basis von Polyimid einen Trübungswert von weniger als 1,0% bei einer Dicke von 10 *µ*m, gemessen unter Verwendung eines Trübungsmessgeräts, aufweist.

6. Harzfilm auf Basis von Polyimid nach Anspruch 1, bei dem:
der Harzfilm auf Basis von Polyimid einen Bow-Wert von 48 *µ*m oder weniger bei einer Dicke von 10 *µ*m, gemessen unter Verwendung eines Spannungsanalysators bei Raumtemperatur, aufweist.

7. Harzfilm auf Basis von Polyimid nach Anspruch 1, bei dem:
der Harzfilm auf Basis von Polyimid einen durchschnittlichen Brechungsindex von 1,7135 oder mehr bei einer Wellenlänge von 532 nm basierend auf einer Dicke von 10 *µ*m, gemessen bei einer Wellenlänge von 532 nm unter Verwendung eines Prismenkopplers, aufweist und der durchschnittliche Brechungsindex gemäß der folgenden Gleichung 2 berechnet wurde: $Durchschnittlicher Brechungsindex = \left({n}_{x}+{n}_{y}+{n}_{z}\right) / 3$
wobei in Gleichung 2 nx der größte Brechungsindex unter Brechungsindizes in der Ebene des Polyimidpolymerfilms, gemessen durch Licht mit einer Wellenlänge von 532 nm, ist; ny der Brechungsindex senkrecht zu nx unter Brechungsindizes in der Ebene des Polyimidpolymerfilms, gemessen durch Licht mit einer Wellenlänge von 532 nm, ist; und nz der Brechungsindex der Dickenrichtung des Polyimidpolymerfilms, gemessen durch Licht mit einer Wellenlänge von 532 nm, ist.

8. Harzfilm auf Basis von Polyimid nach Anspruch 1, bei dem:
die aromatische vierwertige funktionelle Gruppe, die einen polycyclischen Ring des X₂ enthält, eine vierwertige funktionelle Gruppe umfasst, dargestellt durch die folgende chemische Formel 4: 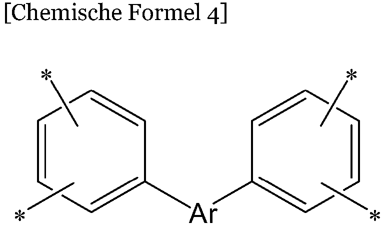
wobei in chemischer Formel 4 Ar eine polycyclische aromatische zweiwertige funktionelle Gruppe ist.

9. Harzfilm auf Basis von Polyimid nach Anspruch 8, bei dem:
die vierwertige funktionelle Gruppe, dargestellt durch die chemische Formel 4, eine funktionelle Gruppe umfasst, dargestellt durch die folgende chemische Formel 4-1:

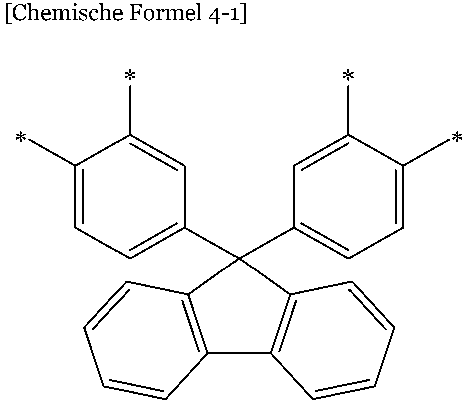

10. Harzfilm auf Basis von Polyimid nach Anspruch 1, bei dem:
die aromatische vierwertige funktionelle Gruppe, die einen monocyclischen Ring des X₁ enthält, eine funktionelle Gruppe umfasst, dargestellt durch die folgende chemische Formel 5:

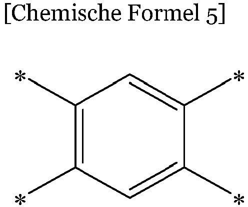

11. Substrat für eine Anzeigevorrichtung, umfassend den Harzfilm auf Basis von Polyimid nach Anspruch 1.

12. Optische Vorrichtung, umfassend den Harzfilm auf Basis von Polyimid nach Anspruch 1.

## Revendications

1. Film de résine à base de polyimide comprenant une résine à base de polyimide contenant une unité de répétition de polyimide représentée par la Formule chimique 1 ci-après et une unité de répétition de polyimide représentée par la Formule chimique 2 ci-après : 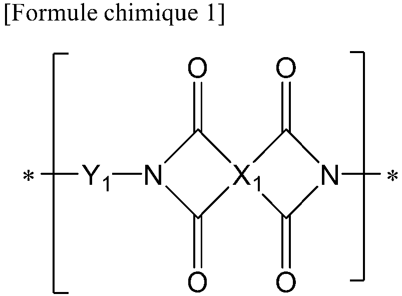 dans lequel, dans la Formule chimique 1,
X₁ est un groupe fonctionnel tétravalent aromatique contenant un cycle monocyclique, et
Y₁ est un groupe fonctionnel divalent aromatique ayant 6 à 10 atomes de carbone, 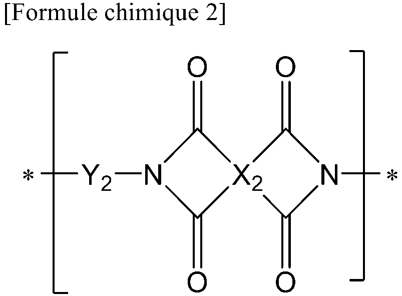
dans lequel, dans la Formule chimique 2,
X₂ est un groupe fonctionnel tétravalent aromatique contenant un cycle polycyclique, et
Y₂ est un groupe fonctionnel divalent aromatique ayant 6 à 10 atomes de carbone,
dans lequel le groupe fonctionnel divalent aromatique ayant 6 à 10 atomes de carbone comprend un groupe fonctionnel représenté par la Formule chimique 3 ci-après : 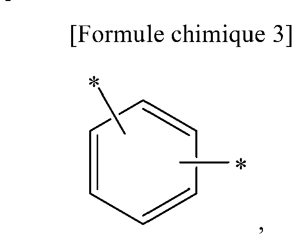
dans lequel le groupe fonctionnel représenté par la Formule chimique 3 comprend un groupe fonctionnel représenté par la Formule chimique 3-1 ci-après : 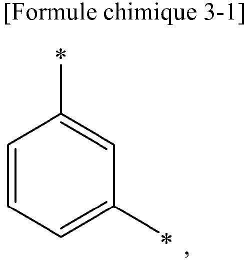 et
dans lequel un rapport molaire entre l'unité de répétition de polyimide représentée par la Formule chimique 1 et l'unité de répétition de polyimide représentée par la Formule chimique 2 est 85:15 à 15:85.

2. Film de résine à base de polyimide selon la revendication 1 dans lequel :
le film de résine à base de polyimide a une contrainte résiduelle égale ou inférieure à 46 MPa dans un substrat inorganique à une épaisseur de 10 *µ*m, comme décrit dans la spécification.

3. Film de résine à base de polyimide selon la revendication 1, dans lequel :
le film de résine à base de polyimide a une valeur de retard Rₜₕ égale ou inférieure à 300 nm dans une direction d'épaisseur à une épaisseur de 10 *µ*m, comme décrit dans la spécification.

4. Film de résine à base de polyimide selon la revendication 1, dans lequel :
le film de résine à base de polyimide a un indice de réfraction égal ou supérieur à 1,71 dans une direction d'épaisseur à une longueur d'onde de 532 nm sur la base d'une épaisseur de 10 *µ*m, mesurée à une longueur d'onde de 532 nm en utilisant un coupleur à prisme.

5. Film de résine à base de polyimide selon la revendication 1, dans lequel :
le film de résine à base de polyimide a une valeur de voile inférieure à 1,0 % à une épaisseur de 10 *µ*m, mesurée en utilisant un dispositif de mesure de voile.

6. Film de résine à base de polyimide selon la revendication 1, dans lequel :
le film de résine à base de polyimide a une valeur Bow égale ou inférieure à 48 *µ*m à une épaisseur de 10 *µ*m, mesurée en utilisant un analyseur de contrainte à température ambiante.

7. Film de résine à base de polyimide selon la revendication 1, dans lequel :
le film de résine à base de polyimide a un indice de réfraction moyen égal ou supérieur à 1,7135 à une longueur d'onde de 532 nm sur la base d'une épaisseur de 10 *µ*m, mesuré à une longueur d'onde de 532 nm en utilisant un coupleur à prisme, et l'indice de réfraction moyen a été calculé selon l'Équation 2 ci-après : $Indice de réfraction moyen = \left({n}_{x}+{n}_{y}+{n}_{z}\right) / 3$
dans l'Équation 2, nₓ est l'indice de réfraction le plus élevé parmi des indices de réfraction dans le plan du film polymère de polyimide, mesuré par une lumière ayant une longueur d'onde de 532 nm ; n_{y} est l'indice de réfraction perpendiculaire à nₓ parmi des indices de réfraction dans le plan du film polymère de polyimide, mesuré par une lumière ayant une longueur d'onde de 532 nm ; et n_{z} est l'indice de réfraction de la direction d'épaisseur du film polymère de polyimide, mesuré par une lumière ayant une longueur d'onde de 532 nm.

8. Film de résine à base de polyimide selon la revendication 1, dans lequel :
le groupe fonctionnel tétravalent aromatique contenant un cycle polycyclique du X₂ comprend un groupe fonctionnel tétravalent représenté par la Formule chimique 4 ci-après : 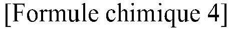 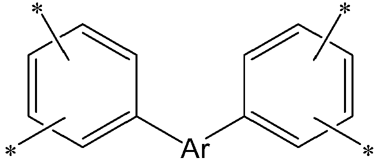
dans lequel, dans la Formule chimique 4, Ar est un groupe fonctionnel divalent aromatique polycyclique.

9. Film de résine à base de polyimide selon la revendication 8 dans lequel :
le groupe fonctionnel tétravalent représenté par la Formule chimique 4 comprend un groupe fonctionnel représenté par la Formule chimique 4-1 ci-après :

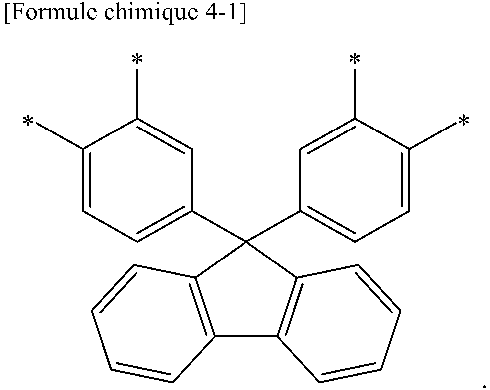

10. Film de résine à base de polyimide selon la revendication 1, dans lequel :
le groupe fonctionnel tétravalent aromatique contenant un cycle monocyclique du X₁ comprend un groupe fonctionnel représenté par la Formule chimique 5 ci-après :

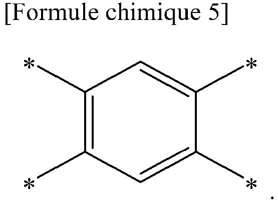

11. Substrat pour un dispositif d'affichage comprenant le film de résine à base de polyimide selon la revendication 1.

12. Dispositif optique comprenant le film de résine à base de polyimide selon la revendication 1.
